# EUROPÄISCHE PATENTSCHRIFT

(11) **EP 3 763 556 B1**
(45) Veröffentlichungstag und Bekanntmachung des Hinweises auf die Patenterteilung: **19.04.2023**
(21) Anmeldenummer: 20179557.2
(22) Anmeldetag: 11.06.2020
(51) Int. Cl.: B60K 11/02, F01P 7/16, B60K 1/00, F01P 5/12, F01P 5/10, B60H 1/00, F04D 15/00

(54) **VERFAHREN ZUR REGELUNG EINES VOLUMENSTROMS**
METHOD FOR CONTROLLING A FLOW RATE
PROCÉDÉ DE RÉGULATION D'UN DÉBIT VOLUMIQUE

(30) Priorität: 08.07.2019 DE 102019210030
(43) Veröffentlichungstag der Anmeldung: 13.01.2021
(73) Patentinhaber: VOLKSWAGEN AG, 38440 Wolfsburg (DE)
(72) Erfinder: Koch, Tino, 38165 Lehre (DE)

(56) Entgegenhaltungen:
- EP-A1- 3 379 132
- US-A- 5 946 926
- US-A1- 2011 297 364

## Beschreibung

Die Erfindung betrifft ein Verfahren zur Regelung eines Volumenstroms in einem Kühlkreislauf, insbesondere in einem Kühlkreislauf eines Stromspeichers, der bevorzugt in einem Kraftfahrzeug zum Speichern von elektrischer Energie eingesetzt wird. Insbesondere weist das Kraftfahrzeug eine elektrische Maschine zum Antrieb des Kraftfahrzeuges auf, wobei die elektrische Maschine durch die in dem Stromspeicher gespeicherte elektrische Energie antreibbar ist.

Die Regelung eines Volumenstroms erfolgt regelmäßig über eine Pumpe, die anhand von Kennfeldern gesteuert wird. Dabei ist für jeden Kühlkreislauf und insbesondere für jede abweichende Ausführung des Kühlkreislaufs ein eigenes Kennfeld bereitzustellen. Auch geringste Änderungen des Kühlkreislaufs müssen durch Anpassungen des Kennfelds berücksichtigt werden.

Gerade bei Kühlkreisläufen von modernen Kraftfahrzeugen muss der Volumenstrom in engen Grenzen eingestellt werden. Dabei darf weder ein bestimmter minimaler Volumenstrom unterschritten noch ein maximaler Volumenstrom überschritten werden.

Aus der US 6,457,442 B1 ist ein flüssigkeitsgekühlter Motor bekannt, der mehrere zueinander parallelgeschaltete Kühlkreisläufe aufweist, die von einer gemeinsamen Pumpe mit Kühlmittel versorgt werden. Die Differenzdrücke der Kühlkreisläufe werden aufeinander abgestimmt ausgeführt, so dass jeder Kühlkreislauf denselben Differenzdruck aufweist und damit mit demselben Massenstrom an Kühlmittel beaufschlagt wird. Der durch die Pumpe geförderte Massenstrom ist konstant und auf die Kühlkreisläufe abgestimmt.

Aus der US 9,148,983 B2 ist ein Verfahren zur automatischen Bestimmung einer Wärmebelastung eines Kühlkreislaufs durch elektronische Komponenten bekannt. Dabei wird ein durch eine Pumpe geförderter Volumenstrom in mehrere parallel geschaltete Kühlkreisläufe aufgeteilt. Jeder Kühlkreislauf kann hinsichtlich des ihn durchströmenden Volumenstroms über ein Regelventil geregelt werden. Die Regelung erfolgt in Abhängigkeit von der Wärmebelastung des Kühlkreislaufs, wobei die Wärmebelastung durch Temperatursensoren erfasst wird. Über den erfassten Druckverlust an jedem Regelventil kann der über das Ventil geleitete Volumenstrom bestimmt werden.

Aus der DE 42 00 316 A1 ist ein Kältemittelhandhabungssystem bekannt, wobei ein Kältemitteldurchsatz zwischen einem Verdampfer und einem Kompressor durch ein stromaufwärts des Verdampfers angeordnetes Ventil reguliert wird, so dass eine Überhitzung des Kältemittels in dem Verdampfer verhindert wird.

Aus der EP 3 379 132 A1 ist eine Kühlvorrichtung für einen Verbrennungsmotor bekannt, welche einen Umlaufpfad für ein Kühlmittel, einen Kühlmitteltemperatursensor, angeordnet an dem Umlaufpfad, eine Kühlmittelpumpe und eine elektronische Steuereinheit, ausgelegt zum Steuern der Kühlmittelpumpe, umfasst. Die Steuereinheit ist dazu eingerichtet, die Kühlmittelpumpe derart zu regeln, dass der Ausgang des Temperatursensors einen Zielwert annimmt. Weiter wird abhängig davon, ob Mizellen dem Kühlmittel hinzugefügt werden und davon, ob die Durchflussrate des durch den Umlaufpfad strömenden Kühlmittels einer Toms-Effekt-Ausdrucksbedingung genügt, wird der relative Wert des Ausgangs des Kühlmitteltemperatursensors korrigiert.

Aus der US2011297364 AA ist ein, Verfahren zum automatischen hydraulischen Abgleich von Heizungs- und/oder Kühlanlagen mit einem Wärme- und/oder Käiteerzeuger, mehreren strangweise verbundenen Verbrauchern sowie mit einer Umwälzpumpe bekannt. Dabei sind in den Rohrleitungsstrangen zur Regelung der Strangdifferenzdrücke mit Stellantrieben versehene Regelarmaturen installiert, wobei in einem ersten Verfahrensschritt von jeweils einem Differenzdruckaufnehmer pro Rohrleitungsstrang die Differenzdrucke von Eingangs- und Ausgangsseite der Regelarmaturen und anschließend die Strangdifferenzdrucke zwischen Vor- und Rücklaufleitungen erfasst und die erfassten Messdaten m eine Recheneinheit eingelesen und in dieser abgespeichert werden, dass in einem zweiten Verfahrensschntt kontinuierlich die Strangdifferenzdrucke m allen Rohrleitungssträngen gemessen werden, die Messdaten an die Recheneinheit übertragen werden und mit dem abgespeicherten Datenmuster verglichen werden, wobei aus den ermittelten Vergleichsdaten von der Recheneinheit Stellbefehle generiert werden, mittels derer durch die Stellantriebe der Regelarmaturen die aktuellen Strangdifferenzdrücke auf die abgespeicherten Solldifferenzdrücke geregelt werden.

Weiterhin ist aus der US 5,946,926 ein Kühlsystem bekannt, in welchem die Kapazität einer verstellbaren Kühlmittelpumpe eingestellt wird basierend auf der Durchflussmenge von Kühlwasser durch eine Rückflussleitung.

Aufgabe der vorliegenden Erfindung ist es, die mit Bezug auf den Stand der Technik angeführten Probleme zumindest teilweise zu lösen. Insbesondere soll ein Verfahren vorgeschlagen werden, durch das eine genaue Regelung eines Volumenstroms durch einen Kühlkreislauf ermöglicht wird, wobei eine einfache Anpassung an einen anders ausgeführten Kühlkreislauf möglich sein soll, also gerade kein eigenes Kennfeld für jeden Kühlkreislauf bzw. jede Änderung des Kühlkreislaufs zu erstellen ist.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus der Figur ergänzt werden, wobei weitere Ausführungsvarianten der Erfindung aufgezeigt werden.

Es wird ein Verfahren zur Regelung eines Volumenstroms in einem Kühlkreislauf vorgeschlagen, wobei der Kühlkreislauf einem elektrisch betriebenen Antriebsstrang eines Kraftfahrzeugs zugeordnet ist und zumindest eine erste Pumpe zur Förderung eines Kühlmittels und mindestens eine von dem Kühlmittel (z. B. ein Gas oder eine Flüssigkeit; bevorzugt aufweisend Wasser oder Öl) beaufschlagte (also z. B. durchströmte) Komponente aufweist. Das Verfahren weist zumindest die folgenden Schritte auf:
a) Betreiben der ersten Pumpe und Fördern des Kühlmittels durch den Kühlkreislauf;
b) Messen eines an der Komponente anliegenden Differenzdrucks des Kühlmittels;
c) Ermitteln eines zu dem gemessenen Differenzdruck korrelierenden Volumenstroms anhand eines in einem Steuergerät hinterlegten Kennfelds und
d) Regelung der ersten Pumpe durch das Steuergerät anhand des über den gemessenen Differenzdruck ermittelten Volumenstroms.
Die obige (nicht abschließende) Einteilung der Verfahrensschritte in a) bis d) soll vorrangig nur zur Unterscheidung dienen und keine Reihenfolge und/oder Abhängigkeit erzwingen. Auch die Häufigkeit der Verfahrensschritte z. B. während der Einrichtung und/oder des Betriebes des Systems kann variieren. Ebenso ist möglich, dass Verfahrensschritte einander zumindest teilweise zeitlich überlagern. Insbesondere finden die Verfahrensschritte b) bis d) während Schritt a) statt. Insbesondere werden die Schritte a) bis d) in der angeführten Reihenfolge durchgeführt.

Insbesondere wird durch das Verfahren der Zusammenhang ausgenutzt, dass sich ein Volumenstrom proportional zu einem Differenzdruck innerhalb des Kühlkreislaufs verändert. Der Differenzdruck wird insbesondere an einem sich hinsichtlich seiner geometrischen Maße nicht verändernden Abschnitt des Kühlkreislaufs ermittelt. Bevorzugt ist in dem Abschnitt die mindestens eine Komponente, ggf. mehrere Komponenten, angeordnet.

Die Komponente ist z. B. ein Wärmetauscher, der insbesondere zur Temperierung einer Komponente (z. B. eine Leistungselektronik, ein Stromspeicher, eine elektrische Maschine, ein Wandler, ggf. aber auch eine Abgasbehandlungseinrichtung, ein Betriebsmittel, z. B. Öl oder Wasser; etc.) eines Kraftfahrzeuges eingesetzt ist.

Über den gemessenen Differenzdruck kann insbesondere der durch die erste Pumpe geförderte Volumenstrom unter Abfrage des Kennfelds bestimmt werden. In Kenntnis des aktuell geförderten Volumenstroms kann dann die erste Pumpe geregelt werden.

Insbesondere kann so die erste Pumpe im Hinblick auf Anforderungen von Komponenten geregelt werden. Wird z. B. eine bestimmte Kühlleistung durch eine Komponente angefordert, kann die erste Pumpe diese Kühlleistung in Kenntnis des aktuell geförderten Volumenstroms in der geforderten Genauigkeit erzeugen und bereitstellen, also ggf. auf einen anderen Volumenstrom hin eingestellt werden.

Der Differenzdruck kann z. B. durch die Messung eines ersten Drucks (unmittelbar) stromaufwärts der Komponente und eines zweiten Drucks (unmittelbar) stromabwärts der Komponente ermittelt werden. Die Differenz zwischen dem ersten Druck und dem (kleineren) zweiten Druck bildet die Druckdifferenz.

Insbesondere wird dabei in Schritt b) zusätzlich eine aktuelle Temperatur des Kühlmittels bestimmt und in den Schritten c) und d) berücksichtigt. Die Ermittlung der Temperatur kann zeitgleich zur Ermittlung der Druckdifferenz erfolgen. Ggf. kann aber auch ein zeitlich versetzt ermittelter Wert für die Temperatur verwendet werden (falls die Temperatur z. B. nur zyklisch ermittelt wird).

Insbesondere wird damit der Zusammenhang berücksichtigt, dass sich der Volumenstrom zusätzlich zum Differenzdruck auch proportional zur Temperatur verändert.

Insbesondere wird in Schritt c) nur das eine Kennfeld berücksichtigt, wobei das Kennfeld (nur) dreidimensional ist und als erste Dimension den Differenzdruck, als zweite Dimension die Temperatur und als dritte Dimension den zu dem Differenzdruck und der Temperatur korrelierenden Volumenstrom aufweist.

Insbesondere kann also aus dem Kennfeld für eine aktuell vorliegende Temperatur und einen aktuell vorliegenden Differenzdruck der aktuell durch die erste Pumpe geförderte Volumenstrom ermittelt und die erste Pumpe entsprechend geregelt werden.

Insbesondere wird der durch die erste Pumpe geförderte Volumenstrom in Abhängigkeit von einer angeforderten Kühlleistung der mindestens einen Komponente (ggf. von einer oder mehreren anderen oder von jeder der in dem Kühlkreislauf angeordneten Komponenten) verändert.

Die angeforderte Kühlleistung kann z. B. durch eine Ermittlung oder Abschätzung bzw. Modellierung der Temperatur bzw. eines Temperaturverlaufs der jeweiligen Komponente bestimmt werden.

Insbesondere weist der Kühlkreislauf mindestens einen ersten Teilkühlkreislauf und einen zweiten Teilkühlkreislauf auf, die einzeln oder gemeinsam von dem Kühlmittel durchströmt und in einer Reihenschaltung (das Kühlmittel durchströmt also z. B. zunächst den ersten Teilkühlkreislauf und erst danach den zweiten Teilkühlkreislauf) oder in einer Parallelschaltung (das Kühlmittel durchströmt nur den ersten oder den zweiten Teilkühlkreislauf, ggf. - durch Aufteilung eines Volumenstroms - beide gleichzeitig) zueinander angeordnet sind. Die Regelung der ersten Pumpe erfolgt anhand des einen Kennfelds.

Das Kühlmittel wird insbesondere durch den Kühlkreislauf im Kreis gefördert. Dabei kann das Kühlmittel durch den ersten Teilkühlkreislauf und/oder durch den zweiten Teilkühlkreislauf strömen. Ein Teilkühlkreislauf kann z. B. einen Bypass umfassen, durch den ein Kühlmittel nur bedarfsweise gefördert wird. Weiter kann ein Teilkühlkreislauf einer bestimmten Funktion zugeordnet sein, z. B. um ein schnelles Aufheizen oder Abkühlen nur einer bestimmten Komponente oder eine geringe Wärmeableitung an Komponenten, die gerade keine Kühlung oder Erwärmung erfordern, zu realisieren.

Es wird weiter ein Kühlkreislauf vorgeschlagen, zumindest aufweisend eine erste Pumpe zur Förderung eines Kühlmittels und mindestens eine von dem Kühlmittel durchströmte Komponente sowie ein Steuergerät zur Regelung der ersten Pumpe. Das Steuergerät ist zur Durchführung des beschriebenen Verfahrens geeignet ausgeführt.

Insbesondere weist der Kühlkreislauf mindestens einen ersten Teilkühlkreislauf und einen zweiten Teilkühlkreislauf auf, die einzeln oder gemeinsam von dem Kühlmittel durchströmt und in einer Reihenschaltung oder in einer Parallelschaltung zueinander angeordnet sind.

Insbesondere ist die Beaufschlagung der Teilkühlkreisläufe mit dem Kühlmittel über mindestens ein Ventil regelbar. Insbesondere ist jedem Teilkühlkreislauf zumindest ein Ventil (ggf. auch zwei Teilkühlkreisläufen auch ein gemeinsames Ventil) zugeordnet, so dass über das Ventil der Teilkühlkreislauf in den Kühlkreislauf einbindbar oder ausschließbar (bzw. mit einem Volumenstrom des Kühlmittels beaufschlagbar oder eben nicht beaufschlagbar) ist. Insbesondere kann ein Volumenstrom durch einen Teilkühlkreislauf durch ein regelbares Ventil geregelt werden, in dem das Ventil auch teilweise geöffnet bzw. geschlossen wird.

Der Kühlkreislauf ist einem elektrisch betriebenen Antriebsstrang eines Kraftfahrzeugs zugeordnet bzw. mit einem Antriebsstrang eines Kraftfahrzeuges zur Temperierung von Komponenten des Antriebsstrangs verbunden.

Es wird weiter ein Kraftfahrzeug vorgeschlagen, zumindest aufweisend zumindest eine elektrische Komponente zum Antrieb des Kraftfahrzeuges, einen Stromspeicher, mindestens einen Kühlkreislauf zum Temperieren der elektrischen Komponente und des Stromspeichers und ein Steuergerät zumindest zum Betreiben des mindestens einen Kühlkreislaufs. Das Steuergerät ist zur Durchführung des beschriebenen Verfahrens geeignet ausgeführt.

Die Ausführungen zu dem Verfahren und dem Kühlkreislauf gelten gleichermaßen für das Kraftfahrzeug und umgekehrt.

Über die unterschiedliche Verschaltung der Teilkühlkreisläufe eines Kühlkreislaufs können insbesondere unterschiedliche Funktionen realisiert werden. So können einzelne Komponenten z. B. in einem geschlossen ausgeführten Teilkühlkreislauf (mit eigener - zweiter - Pumpe) erwärmt werden. Dafür kann z. B. nach Einstellen bzw. Beenden eines (Fahr-)Betriebs des Kraftfahrzeuges weiter vorliegende Abwärme der mindestens einen (elektrischen) Komponente (und ggf. weiterer Komponenten des Kraftfahrzeuges) in dem Teilkühlkreislauf gespeichert werden und zum Erwärmen einer ausgewählten Komponente verwendet werden. Insbesondere kann so z. B. ein in dem Kühlkreislauf, bzw. in dem Teilkühlkreislauf, angeordneter Stromspeicher mit der Restwärme temperiert werden. Damit kann die Wärmeenergie des Kraftfahrzeuges genutzt und z. B. in den Stromspeicher übertragen werden. Die so in dem Stromspeicher gespeicherte Wärme kann insbesondere für Neustarts des Kraftfahrzeuges wieder genutzt werden, wobei der Bedarf hinsichtlich einer Vorheizung des Stromspeichers reduziert werden kann.

Weiter können bestimmte Komponenten nach Start der ersten Pumpe gezielt mit Kühlmittel beaufschlagt und gekühlt werden, während andere Komponenten erst zu einem späteren Zeitpunkt mit einer Kühlleistung bzw. dem Volumenstrom des Kühlmittels beaufschlagt werden.

Die mindestens eine (elektrische) Komponente umfasst z. B. eine Leistungselektronik, eine elektrische Maschine, einen Stromspeicher (einen Akkumulator) oder einen Wandler, z. B. einen Gleichstromwandler.

Insbesondere werden unterschiedliche (elektrische) Komponenten durch voneinander unterschiedliche Teilkühlkreisläufe temperiert.

Der Kühlkreislauf kann eine zweite Pumpe aufweisen. Insbesondere ist diese zweite Pumpe in einem zuschaltbaren Teilkühlkreislauf angeordnet. Insbesondere kann zumindest zeitweise ein Kühlmittel ausschließlich durch die zweite Pumpe gefördert werden. Insbesondere kann dazu der Teilkühlkreislauf mit der zweiten Pumpe fluidtechnisch von der ersten Pumpe getrennt werden, so dass das Kühlmittel nur durch den Teilkühlkreislauf und dabei nur durch die zweite Pumpe gefördert wird. Es ist auch möglich, beide Pumpen zur Förderung des Kühlmittels gleichzeitig zu betreiben.

Auch die zweite Pumpe kann wie die erste Pumpe anhand eines über eine Druckdifferenz und ggf. zusätzlich über eine Temperatur ermittelten Volumenstroms geregelt werden.

Das beschriebene Verfahren zur Regelung eines Volumenstroms kann auch von einem Computer bzw. mit einem Prozessor des Steuergeräts ausgeführt werden.

Es wird demnach auch ein System zur Datenverarbeitung vorgeschlagen, das einen Prozessor umfasst, der so angepasst/konfiguriert ist, dass er das Verfahren bzw. einen Teil der Schritte des vorgeschlagenen Verfahrens ausführt.

Es kann ein computerlesbares Speichermedium vorgesehen sein, das Befehle umfasst, die bei der Ausführung durch einen Computer/Prozessor diesen veranlassen, das Verfahren bzw. mindestens einen Teil der Schritte des vorgeschlagenen Verfahrens auszuführen.

Die Ausführungen zu dem Verfahren sind insbesondere auf den Kühlkreislauf, das Kraftfahrzeug, das System, das Speichermedium oder das computerimplementierte Verfahren übertragbar und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

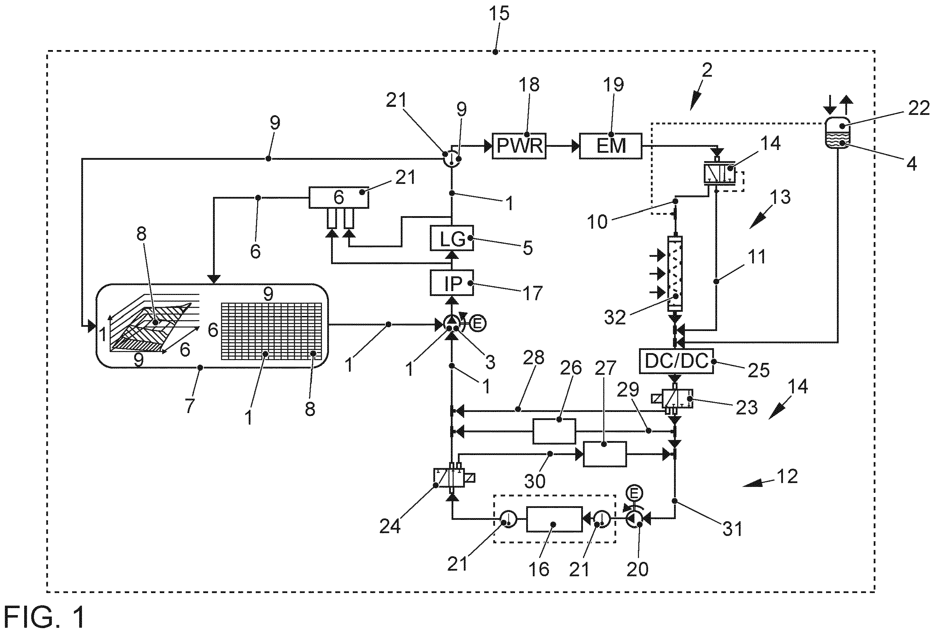

Die Erfindung sowie das technische Umfeld werden nachfolgend anhand der beiliegenden Figur näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in der Figur erläuterten Sachverhalte zu extrahieren und mit anderen Bestandteilen und Erkenntnissen aus der vorliegenden Beschreibung zu kombinieren. Insbesondere ist darauf hinzuweisen, dass die Figur und insbesondere die dargestellten Größenverhältnisse nur schematisch sind. Fig. 1 zeigt ein Kraftfahrzeug 15 mit einem Kühlkreislauf 2.

Das Kraftfahrzeug 15 weist mehrere Komponenten 5, 17, 16, 18, 19, 20, 21, 22, 25 zum Antrieb des Kraftfahrzeuges 15 auf. Die erste elektrische Komponente 5 ist z. B. ein Wärmetauscher für ein Ladegerät eines Stromspeichers 16. Das Kraftfahrzeug 15 umfasst weiter einen Wärmetauscher für eine induktive Leiterplatte (zweite Komponente 17), einen Wärmetauscher für eine Leistungselektronik (dritte Komponente 18), einen Wärmetauscher für eine elektrische Maschine (vierte Komponente 19), einen DC-DC-Wandler (fünfte Komponente 25), einen Kühler (sechste Komponente 26), einen HV-Heizer (siebte Komponente 27) und einen Kühler (achte Komponente 32). Der Kühlkreislauf 2 umfasst mehrere Teilkühlkreisläufe 10, 11, 28, 29, 30, 31 und ein Steuergerät 7 zum Betreiben des Kühlkreislaufs 2.

Die (erste) Komponente 5, die zweite Komponente 17, die dritte Komponente 18 und die vierte Komponente 19 sind in dem Kühlkreislauf 2 angeordnet. Stromabwärts der vierten Komponente ist ein erstes Ventil 14 angeordnet, über das ein Volumenstrom 1 in den ersten Teilkühlkreislauf 10 und oder in den zweiten Teilkühlkreislauf 11 leitbar ist. Der erste Teilkühlkreislauf 10 und der zweite Teilkühlkreislauf 11 sind in einer Parallelschaltung 13 zueinander angeordnet. In dem ersten Teilkühlkreislauf 10 ist ein Kühler als achte Komponente 32 angeordnet, der über den als Bypass ausgeführten zweiten Teilkühlkreislauf 11 umgangen werden kann.

Stromabwärts einer Zusammenführung dieser Teilkühlkreisläufe 10, 11 ist ein Wandler als fünfte Komponente 25 angeordnet. Der Kühlkreislauf 2 weist einen Ausgleichsbehälter 22 zur Versorgung des Kühlkreislaufs 2 mit dem Kühlmittel 4 auf.

Stromabwärts des Wandlers ist ein zweites Ventil 23 angeordnet, über das ein dritter Teilkühlkreislauf 28 (als Bypass zur Umgehung des Stromspeichers 16) und/oder zumindest ein sechster Teilkühlkreislauf 31 mit dem Volumenstrom 1 beaufschlagbar ist.

Der dritte Teilkühlkreislauf 28 führt den Volumenstrom 1 zurück zur ersten Pumpe 3. Der sechste Teilkühlkreislauf 31 weist eine zweite Pumpe 20 sowie den Stromspeicher 16 auf. Stromaufwärts und stromabwärts des Stromspeichers 16 sind Sensoren 21 angeordnet, die zur Überwachung einer Temperatur 9 und zur Ermittlung einer ggf. benötigten Kühlleistung vorgesehen sind. Über die zweite Pumpe 20 kann z. B. ein weiterer Volumenstrom 1, durch Betätigung eines dritten Ventils 24 auch unabhängig von dem durch die erste Pumpe 3 geförderten Volumenstrom 1, durch den sechsten Teilkühlkreislauf 31 und dann entweder durch den fünften Teilkühlkreislauf 29 oder den vierten Teilkühlkreislauf 29 gefördert werden.

Der sechste Teilkühlkreislauf 31 ist in einer Reihenschaltung 12 zumindest zu dem fünften Teilkühlkreislauf 30 angeordnet.

Gemäß Schritt a) des Verfahrens erfolgt ein Betreiben der ersten Pumpe 3 und Fördern des Kühlmittels 4 mit einem Volumenstrom 1 durch den Kühlkreislauf 2. Gemäß Schritt b) erfolgt ein Messen eines an der (ersten) Komponente 5 anliegenden Differenzdrucks 6 des Kühlmittels 4 (siehe Pfeile ausgehend von dem Kühlkreislauf 2 unmittelbar stromaufwärts und stromabwärts der ersten Komponente, über den Sensor 21 hin zum Steuergerät 7). Gemäß Schritt c) erfolgt ein Ermitteln eines zu dem gemessenen Differenzdruck 6 korrelierenden Volumenstroms 1 anhand eines in dem Steuergerät 7 hinterlegten Kennfelds 8. Gemäß Schritt d) erfolgt eine Regelung der ersten Pumpe 3 durch das Steuergerät 7 anhand des über den gemessenen Differenzdruck 6 ermittelten Volumenstroms 1 (siehe Pfeile ausgehend vom Steuergerät 7 hin zur ersten Pumpe 3).

Über den gemessenen Differenzdruck 6 kann der durch die erste Pumpe 3 geförderte Volumenstrom 1 unter Abfrage des Kennfelds 8 bestimmt werden. In Kenntnis des aktuell geförderten Volumenstroms 1 kann dann die erste Pumpe 3 geregelt werden. Die erste Pumpe 3 kann so auch im Hinblick auf Anforderungen von Komponenten (hier z. B. des Stromspeichers 16, der über Sensoren 21 überwacht wird) geregelt werden. Wird also eine bestimmte Kühlleistung durch eine Komponente angefordert bzw. aufgrund der Sensoren 21 als erforderlich erkannt, kann die erste Pumpe 3 diese Kühlleistung in Kenntnis des aktuell geförderten Volumenstroms 1 in der geforderten Genauigkeit erzeugen und bereitstellen, also ggf. auf einen anderen Volumenstrom 1 hin eingestellt werden.

In Schritt b) wird zusätzlich eine aktuelle Temperatur 9 des Kühlmittels 4 bestimmt und in den Schritten c) und d) berücksichtigt (siehe Pfeile ausgehend von dem Sensor 21 hin zum Steuergerät 7 und vom Steuergerät 7 hin zur ersten Pumpe 3).

In Schritt c) wird nur das eine Kennfeld 8 berücksichtigt, wobei das Kennfeld 8 dreidimensional ist und als erste Dimension den Differenzdruck 6, als zweite Dimension die Temperatur 9 und als dritte Dimension den zu dem Differenzdruck 6 und der Temperatur 9 korrelierenden Volumenstrom 1 aufweist. Aus dem Kennfeld 8 kann also für eine aktuell vorliegende Temperatur 9 und einen aktuell vorliegenden Differenzdruck 6 der aktuell durch die erste Pumpe 3 geförderte Volumenstrom 1 ermittelt und die erste Pumpe 3 entsprechend geregelt werden.

### Bezugszeichenliste

- 1: Volumenstrom
- 2: Kühlkreislauf
- 3: erste Pumpe
- 4: Kühlmittel
- 5: (erste) Komponente
- 6: Differenzdruck
- 7: Steuergerät
- 8: Kennfeld
- 9: Temperatur
- 10: erster Teilkühlkreislauf
- 11: zweiter Teilkühlkreislauf
- 12: Reihenschaltung
- 13: Parallelschaltung
- 14: erstes Ventil
- 15: Kraftfahrzeug
- 16: Stromspeicher
- 17: zweite Komponente
- 18: dritte Komponente
- 19: vierte Komponente
- 20: zweite Pumpe
- 21: Sensor
- 22: Ausgleichbehälter
- 23: zweites Ventil
- 24: drittes Ventil
- 25: fünfte Komponente
- 26: sechste Komponente
- 27: siebte Komponente
- 28: dritter Teilkühlkreislauf
- 29: vierter Teilkühlkreislauf
- 30: fünfter Teilkühlkreislauf
- 31: sechster Teilkühlkreislauf
- 32: achte Komponente

## Patentansprüche

1. Verfahren zur Regelung eines Volumenstroms (1) in einem Kühlkreislauf (2), wobei der Kühlkreislauf (2) einem elektrisch betriebenen Antriebsstrang (14) eines Kraftfahrzeugs (15) zugeordnet ist und zumindest eine erste Pumpe (3) zur Förderung eines Kühlmittels (4) und mindestens eine von dem Kühlmittel (4) beaufschlagte Komponente (5) aufweist, wobei das Verfahren zumindest die folgenden Schritte aufweist:
a) Betreiben der ersten Pumpe (3) und Fördern des Kühlmittels (4) durch den Kühlkreislauf (2);
b) Messen eines an der Komponente (5) anliegenden Differenzdrucks (6) des Kühlmittels (4);
c) Ermitteln eines zu dem gemessenen Differenzdruck (6) korrelierenden Volumenstroms (1) anhand eines in einem Steuergerät (7) hinterlegten Kennfelds (8) und
d) Regelung der ersten Pumpe (3) durch das Steuergerät (7) anhand des über den gemessenen Differenzdruck (6) ermittelten Volumenstroms (1).

2. Verfahren nach Patentanspruch 1, wobei in Schritt b) zusätzlich eine aktuelle Temperatur (9) des Kühlmittels (4) bestimmt und in den Schritten c) und d) berücksichtigt wird.

3. Verfahren nach Patentanspruch 2, wobei in Schritt c) nur das eine Kennfeld (8) berücksichtigt wird, wobei das Kennfeld (8) dreidimensional ist und als erste Dimension den Differenzdruck (6), als zweite Dimension die Temperatur (9) und als dritte Dimension den zu dem Differenzdruck (6) und der Temperatur (9) korrelierenden Volumenstrom (1) aufweist.

4. Verfahren nach einem der vorhergehenden Patentansprüche, wobei der durch die erste Pumpe (3) geförderte Volumenstrom (1) in Abhängigkeit von einer angeforderten Kühlleistung der mindestens einen Komponente (5) verändert wird.

5. Verfahren nach einem der vorhergehenden Patentansprüche, wobei der Kühlkreislauf (2) mindestens einen ersten Teilkühlkreislauf (10) und einen zweiten Teilkühlkreislauf (11) aufweist, die einzeln oder gemeinsam von dem Kühlmittel (4) durchströmt und in einer Reihenschaltung (12) oder in einer Parallelschaltung (13) zueinander angeordnet sind; wobei die Regelung der ersten Pumpe (3) anhand des einen Kennfelds (8) erfolgt.

6. Kühlkreislauf (2), zumindest aufweisend eine erste Pumpe (3) zur Förderung eines Kühlmittels (4) und mindestens eine von dem Kühlmittel (4) durchströmte Komponente (5) sowie ein Steuergerät (7) zur Regelung der ersten Pumpe (3), wobei das Steuergerät (7) zur Durchführung des Verfahrens nach einem der vorhergehenden Patentansprüche geeignet ausgeführt ist, wobei der Kühlkreislauf (2) einem elektrisch betriebenen Antriebsstrang (14) eines Kraftfahrzeugs (15) zugeordnet ist.

7. Kühlkreislauf (2) nach Patentanspruch 6, wobei der Kühlkreislauf (2) mindestens einen ersten Teilkühlkreislauf (10) und einen zweiten Teilkühlkreislauf (11) aufweist, die einzeln oder gemeinsam von dem Kühlmittel (4) durchströmt und in einer Reihenschaltung (12) oder in einer Parallelschaltung (13) zueinander angeordnet sind.

8. Kühlkreislauf (2) nach einem der vorhergehenden Patentansprüche 6 und 7, wobei die Beaufschlagung der Teilkühlkreisläufe (12, 13) mit dem Kühlmittel über mindestens ein Ventil (14) regelbar ist.

9. Kraftfahrzeug (15), zumindest aufweisend zumindest eine elektrische Komponente (5) zum Antrieb des Kraftfahrzeuges (15), einen Stromspeicher (16), mindestens einen Kühlkreislauf (2) zum Temperieren der elektrischen Komponente (5) und des Stromspeichers (16) und ein Steuergerät (7) zumindest zum Betreiben des mindestens einen Kühlkreislaufs (2); wobei das Steuergerät (7) zur Durchführung des Verfahrens nach einem der vorhergehenden Patentansprüche 1 bis 5 geeignet ausgeführt ist.

## Claims

1. Method for controlling a flow rate (1) in a cooling circuit (2), wherein the cooling circuit (2) is assigned to an electrically operated drive train (14) of a motor vehicle (15) and has at least a first pump (3) for delivering a coolant (4) and at least one component (5) exposed to the coolant (4), wherein the method comprises at least the following steps:
a) operating the first pump (3) and delivering the coolant (4) through the cooling circuit (2);
b) measuring a differential pressure (6) of the coolant (4) acting on the component (5);
c) ascertaining a flow rate (1), correlating with the measured differential pressure (6), on the basis of a characteristic map (8) stored in a control device (7) and
d) controlling the first pump (3) by the control device (7) on the basis of the flow rate (1) determined by way of the measured differential pressure (6).

2. Method according to Patent Claim 1, wherein a current temperature (9) of the coolant (4) is additionally determined in step b) and is taken into account in steps c) and d) .

3. Method according to Patent Claim 2, wherein only one characteristic map (8) is taken into account in step c), wherein the characteristic map (8) is three-dimensional and has the differential pressure (6) as the first dimension, the temperature (9) as the second dimension and the flow rate (1) correlating with the differential pressure (6) and the temperature (9) as the third dimension.

4. Method according to one of the preceding patent claims, wherein the flow rate (1) delivered by the first pump (3) is varied in dependence on a cooling output required by the at least one component (5).

5. Method according to one of the preceding patent claims, wherein the cooling circuit (2) has at least a first partial cooling circuit (10) and a second partial cooling circuit (11), which are flowed through individually or jointly by the coolant (4) and are arranged in relation to one another in a series connection (12) or in a parallel connection (13); wherein the control of the first pump (3) takes place on the basis of the one characteristic map (8).

6. Cooling circuit (2), at least having a first pump (3) for delivering a coolant (4) and at least one component (5) flowed through by the coolant (4) and also a control device (7) for controlling the first pump (3), wherein the control device (7) is designed suitably for carrying out the method according to one of the preceding patent claims, wherein the cooling circuit (2) is assigned to an electrically operated drive train (14) of a motor vehicle (15).

7. Cooling circuit (2) according to Patent Claim 6, wherein the cooling circuit (2) has at least a first partial cooling circuit (10) and a second partial cooling circuit (11), which are flowed through individually or jointly by the coolant (4) and are arranged in relation to one another in a series connection (12) or in a parallel connection (13).

8. Cooling circuit (2) according to one of the preceding Patent Claims 6 and 7, wherein the exposure of the partial cooling circuits (12, 13) to the coolant is controllable by way of at least one valve (14).

9. Motor vehicle (15), at least having at least one electrical component (5) for driving the motor vehicle (15), a power storage unit (16), at least one cooling circuit (2) for adjusting the temperature of the electrical component (5) and the power storage unit (16) and a control device (7) at least for operating the at least one cooling circuit (2); wherein the control device (7) is designed suitably for carrying out the method according to one of the preceding Patent Claims 1 to 5.

## Revendications

1. Procédé de régulation d'un débit volumique (1) dans un circuit de refroidissement (2), le circuit de refroidissement (2) étant associé à une chaîne cinématique (14) à commande électrique d'un véhicule automobile (15) et comportant au moins une première pompe (3) destinée à transporter un agent de refroidissement (4) et au moins un composant (5) sollicité par l'agent de refroidissement (4),
le procédé comprenant au moins les étapes suivantes :
a) faire fonctionner la première pompe (3) et acheminer l'agent de refroidissement (4) à travers le circuit de refroidissement (2) ;
b) mesurer une pression différentielle (6) de l'agent de refroidissement (4) qui est appliquée au composant (5) ;
c) déterminer un débit volumique (1), corrélé à la pression différentielle mesurée (6), à l'aide d'un diagramme caractéristique (8) mémorisé dans une unité de commande (7) et
d) réguler la première pompe (3) par le biais de l'unité de commande (7) en fonction du débit volumétrique (1) déterminé par le biais de la pression différentielle mesurée (6).

2. Procédé selon la revendication 1, une température actuelle (9) de l'agent de refroidissement (4) étant en outre déterminée à l'étape b) et prise en compte aux étapes c) et d) .

3. Procédé selon la revendication 2, un seul diagramme caractéristique (8) étant pris en compte à l'étape c),
le diagramme caractéristique (8) étant tridimensionnel et ayant la pression différentielle (6) comme première dimension, la température (9) comme deuxième dimension et le débit volumique (1) corrélé à la pression différentielle (6) et à la température (9) comme troisième dimension.

4. Procédé selon l'une des revendications précédentes, le débit volumétrique (1) transporté par la première pompe (3) étant modifié en fonction d'une capacité de refroidissement requise de l'au moins un composant (5).

5. Procédé selon l'une des revendications précédentes, le circuit de refroidissement (2) comportant au moins une première partie de circuit de refroidissement (10) et une deuxième partie de circuit de refroidissement (11) qui sont traversées individuellement ou conjointement par l'agent de refroidissement (4) et qui sont disposées en série (12) ou en parallèle (13) l'une par rapport à l'autre ; la régulation de la première pompe (3) étant effectuée sur la base d'un diagramme caractéristique (8).

6. Circuit de refroidissement (2), comportant au moins une première pompe (3) destinée à transporter un agent de refroidissement (4) et au moins un composant (5) traversé par l'agent de refroidissement (4), et une unité de commande (7) destinée à réguler la première pompe (3), l'unité de commande (7) étant conçue pour mettre en œuvre le procédé selon l'une des revendications précédentes, le circuit de refroidissement (2) étant associé à une chaîne cinématique (14) à commande électrique d'un véhicule automobile (15).

7. Circuit de refroidissement (2) selon la revendication 6, le circuit de refroidissement (2) comportant au moins une première partie de circuit de refroidissement (10) et une deuxième partie de circuit de refroidissement (11) qui sont traversées individuellement ou conjointement par l'agent de refroidissement (4) et qui sont disposées en série (12) ou en parallèle (13) l'une par rapport à l'autre.

8. Circuit de refroidissement (2) selon l'une des revendications précédentes 6 et 7, la charge des parties de circuit de refroidissement (12, 13) en agent de refroidissement pouvant être régulée par le biais d'au moins une vanne (14).

9. Véhicule automobile (15), au moins comportant au moins un composant électrique (5) destiné à l'entraînement du véhicule automobile (15), un accumulateur d'énergie (16), au moins un circuit de refroidissement (2) destiné à réguler la température du composant électrique (5) et de l'accumulateur d'énergie (16) et une unité de commande (7) au moins destinée à faire fonctionner l'au moins un circuit de refroidissement (2) ; l'unité de commande (7) étant conçue de manière appropriée pour mettre en œuvre le procédé selon l'une des revendications précédentes 1 à 5.
